# EUROPÄISCHE PATENTSCHRIFT

(11) **EP 4 018 111 B1**
(45) Veröffentlichungstag und Bekanntmachung des Hinweises auf die Patenterteilung: **16.10.2024**
(21) Anmeldenummer: 20750262.6
(22) Anmeldetag: 31.07.2020
(51) Int. Cl.: F16G 1/08, B66B 7/06

(54) **ZUG- ODER TRAGRIEMEN**
TENSILE OR SUPPORT BELT
COURROIE DE TRACTION OU DE SUPPORT

(30) Priorität: 23.08.2019 DE 102019212671
(43) Veröffentlichungstag der Anmeldung: 29.06.2022
(73) Patentinhaber: ContiTech Deutschland GmbH, 30175 Hannover (DE)
(72) Erfinder: QUASS, Jan-Henning, 30419 Hannover (DE); GÖSER, Hubert, 30419 Hannover (DE); KUCHARZCZYK, Andre, 30419 Hannover (DE); OLDE-KEIZER, Nico, 30419 Hannover (DE)
(74) Vertreter: Continental Corporation
(86) Internationale Anmeldenummer: PCT/EP2020/071722
(87) Internationale Veröffentlichungsnummer: WO 2021/037482

(56) Entgegenhaltungen:
- WO-A1-2015/152899
- DE-A1- 102009 025 954
- DE-A1- 102009 025 956
- DE-A1- 102010 037 089

## Beschreibung

Die Erfindung betrifft einen Zug- oder Tragriemen aus elastomerem Material mit einer im Wesentlichen flachen Antriebsseite, insbesondere einen Aufzuggurt, wobei im elastomeren Material des Zug- oder Tragriemens in seiner Längsrichtung parallel verlaufende Zugträger oder Corde eingebettet sind und der Zug- oder Tragriemen Riemenscheiben und/oder Umlenkrollen eines Riementriebs umlaufend über einen Umschlingungsbogen umschlingt, wodurch der Zug- oder Tragriemen angetrieben, umgelenkt oder geführt ist, wobei die flache Antriebsseite des Zug- oder Tragriemens mehrere Nuten aufweist.

Riemenartige Tragmittel haben sich in der Aufzugstechnik seit Jahren mehr und mehr durchgesetzt. Insbesondere sind hier als Flachriemen ausgebildete Aufzugsgurte zu erwähnen, welche über ballige Antriebsrollen oder -scheiben und Umlenkrollen oder - scheiben geführt werden, auf denen sich die Riemen durch die Balligkeit zentrieren können.

Im Stand der Technik sind auch antriebsseitige Profilierungen von Flachriemen oder Aufzugsgurten bekannt, etwa in Längsrichtung des Flachriemens verlaufende Nuten. Letztere werden als vorteilhaft angesehen im Hinblick auf die Vermeidung von Schmutzablagerungen und sind zur Ableitung von Flüssigkeiten geeignet. Eine solche Ausbildung von Riemen offenbaren beispielsweise die DE 10 2010 037 089 A1 und die WO 2015/152899 A1. Antriebsriemen können schließlich auch beidseitig, d.h. sowohl antriebsseitig / traktionsseitig als auch rückenseitig mit Profilen oder Rippen versehen werden, um die Führung zu verbessern.

Mit dem Begriff "Riemenseite" wird im Fachbereich die Fläche, also die Seite des Riemens bezeichnet, die auf einer Antriebsrolle oder auf einer Umlenkrolle aufliegt. Üblicherweise ist die auf der Antriebsrolle aufliegende bzw. die die Antriebsrolle umlaufend umschlingenden Riemenseite die Antriebsseite, während die gegenüberliegende Riemenseite, die üblicherweise Umlenkrollen umlaufend umschlingt, als Riemenrücken oder Riemenrückseite bezeichnet wird. Als Synonym für den Begriff "antriebsseitig" wird auch der Begriff "traktionsseitig" verwendet. Ebenso wird statt des Begriffs "rückseitig" die Bezeichnung "umlenkseitig" benutzt. Die Begriffe "Scheibe" und "Rolle" werden im Weiteren als Synonym gebraucht.

Flachriemen als Tragmittel in der Aufzugstechnik müssen die zu übertragenden Momente bzw. Kräfte durch Reibkräfte zwischen der Antriebsscheibe/Traktionsscheibe und dem Tragmittel übertragen. Natürlich ist es gewünscht, je nach Belastungsgrad, dass möglichst große Momente durch die Antriebsscheiben / Traktionsscheiben und die Riemen übertragen werden. Das Kraftverhältnis der Riemenenden unterliegt dabei der so genannten Seilreibung oder Umschlingungsreibung. Die dort vorhandenen oder entstehenden Zugkräfte sind abhängig vom Umschlingungswinkel und vom Reibwert zwischen der Traktionsscheibe und dem Tragmittel. Der Umschlingungswinkel in der Aufzugstechnik liegt in der Regel zwischen 120° und 180°.

Der Reibbeiwert wird durch die Materialpaarung von Traktionsscheibe und Tragmittel bestimmt. In der Regel ist die Traktionsscheibe aus Stahl und das Mantelmaterial eines als Flachriemen ausgebildeten Aufzugsriemens aus Polyurethan. Der gewünschte Reibwert muss so groß sein, dass die maximal geforderten Kräfte übertragen werden können. Er sollte aber auch nicht so hoch sein, dass es an den Umlenkscheiben zu lauten Geräuschen kommt.

Natürlich wird die Reibung bei Flachriemen auch durch die ballig ausgebildeten Antriebsrollen oder -scheiben beeinflusst, mit deren Hilfe die Riemen zentriert werden. Bei balligen Rollen sind die Umfangsgeschwindigkeiten über die Breite ihrer Außenoberfläche unterschiedlich, während die Riemengeschwindigkeit theoretisch über die Riemenbreite gleich ist, wodurch eine Relativbewegung zwischen Riemenoberfläche und Rollenoberfläche entstehen kann.

Bei neuen Aufzügen lässt sich der geforderte Reibwert gut realisieren. Die Felderfahrung zeigt aber, dass durch ungünstige Umwelteinflüsse der Reibbeiwert stark beeinflusst werden kann. Temperatur und Feuchtigkeitsschwankungen können zusammen mit Staub aus der Umgebung und dem Abrieb die Oberflächenbeschaffenheit der Traktionsscheibe oder des Tragmittels beeinflussen. Wird dieser Effekt zu stark, so kann der Riemen rutschen, was zu merkbaren Störungen des Aufzugsbetriebs führen kann. Dabei ist aber zu berücksichtigen, dass ein unterhalb solcher Effekte üblicherweise auftretender "Schlupf" des Riemens nicht zu beanstanden und der sicheren Funktionsweise zuträglich ist.

Eine Neigung, nach längerem Einsatz zu rutschen, kann durch die Gestaltung oder Strukturierung der antriebsseitigen Oberfläche des Flachriemen vermindert werden. Durch eine Strukturierung oder Profilierung in diesem Sinne, etwa vergleichbar mit dem Laufstreifen eines Reifens, ergibt sich jedoch ein so gravierender Einfluss auf die Geräuschemission, dass im Stand der Technik solche Maßnahmen als nicht zielführend angesehen werden. Eine Optimierung der Reibpaarung zwischen Riemen und Scheibe im Hinblick auf die Übertragung möglichst großer Drehmomente bei möglichst geringer Geräuschemission ist aufgrund dieses Zielkonflikts also ein recht anspruchsvoller und schwieriger Prozess.

Für die Erfindung bestand also die Aufgabe, einen Flachriemen als Antriebsriemen insbesondere in der Aufzugstechnik bereitzustellen, der hohe Drehmomente und Kräfte im Zusammenwirken mit der Antriebsscheibe oder -rolle übertragen kann und trotzdem wenig Geräusche im Betrieb erzeugt, der weiterhin auch über die gesamte Lebensdauer keine nennenswerten Einbußen bei der Traktionsfähigkeit zeigt und der darüber hinaus einfach und kostengünstig herzustellen ist.

Gelöst wird diese Aufgabe durch die Merkmale des Hauptanspruchs. Weitere vorteilhafte Ausbildungen sind in den Unteransprüchen offenbart.

Dabei verlaufen die Nuten in Riemenlängsrichtung und weisen eine in Riemenquerrichtung abwechselnd zunehmende und abnehmende Breite *b* auf, vorzugsweise eine sich Riemenquerrichtung periodisch zwischen den Werten *b min* und *b max* verändernde Breite. Damit entsteht eine Profilierung, die in Bezug auf den Antriebsriemen in erster Linie eine Längsorientierung aufweist und keine oder wenig Querorientierung. Querkomponenten ergeben sich nur durch die sich verändernde Nutbreite.

Durch eine solche Ausbildung erreicht man, dass die positiven Effekte der Nuten bereitgestellt werden, dass nämlich hohe Traktion auch bei Flachriemen realisiert und eine Reduzierung der Verschmutzung erreicht werden, ohne dass gleichzeitige die damit in einem Zielkonflikt stehende Geräuschentwicklung oder ein hoher Abrieb als negative Folgen auftreten. Die spezielle Ausbildung der Nuten kann dabei zunächst und grundsätzlich dem Fachmann überlassen bleiben, solange nur der erfinderische Gedanke der Breitenvariation nicht verlassen und dieses Merkmal realisiert wird, insbesondere im Zusammenwirken mit der üblicherweise vorgesehenen Balligkeit der Rollen zur Zentrierung von Flachriemen.

Erfindungsgemäß variiert die Breite zwischen den Werten *b min* = 0,1 *[mm]* und
*b max* = (*s* - *d*) + *d*/2) [*mm*], vorzugsweise zwischen den Werten *b min* = 0,5 *[mm]* und *b max* = (*s* - *d*) + *d*/4) [*mm*],
wobei für die Parameter gilt: d = Durchmesser der Zugträger/Corde und s = Abstand der Mittellinien zweier benachbarter Zugträger.

Durch eine solche Auslegung, insbesondere auch mit der Anordnung der Nuten zwischen jeweils zwei längs verlaufenden Zugträgern, erreicht man eine Konstruktion, die die oben genannten Vorteile der variablen Nutbreite nutzt, ohne die Festigkeit oder die Lebensdauer der Antriebsriemen zu beeinflussen.

Die so entstandene Profilierung der Antriebsseite weist also Nuten auf, die sich in erster Linie durch eine Längsorientierung auszeichnen, nämlich durch eine Orientierung in Längsrichtung des Flachriemens, und die im Hinblick auf die gesamte Riemenkonstruktion optimiert sind. Hierdurch ist eine nur geringe Geräuschbildung gewährleistet und eine Schmutzabweisung wird ebenfalls erreicht. Zusätzlich ist jedoch durch die variierende Breite der Nuten auch eine Querorientierung vorhanden, die gerade so groß ist, dass eine erhöhte und sichere Traktion erreicht wird, ohne dass übermäßiger Schlupf oder einen Riemenrutschen entstehen kann.

Eine weitere vorteilhafte Ausbildung besteht darin, dass die Nuten eine in Riemenlängsrichtung abwechselnd zunehmende und abnehmende Tiefe *t* aufweisen. Auch dadurch erreicht man eine leichte Anpassung an die erforderliche Traktion bzw. Drehmomentenübertragung bei gleichzeitiger Geräuschverringerung bereits bei der Herstellung der Riemen. Das gilt insbesondere dann, wenn die aus der Riemenkonstruktion sich ableitenden Parameter einfließen und die Nuttiefe so ausgebildet wird, dass die Tiefe zwischen den Werten *t min* = 0,1 [*mm*] und *t max* = (*h* - *d*)/2) [*mm*] variiert, vorzugsweise zwischen den Werten *t min* = 0,2 [*mm*] und *t max* = (*h* - *d*)/4) [*mm*], wobei für die Parameter gilt: d = Durchmesser der Zugträger/Corde und h = Dicke des Zug- oder Tragriemens.

Eine weitere vorteilhafte Ausbildung besteht darin, dass die Nuten auf der Antriebsseite jeweils zwischen zwei in Längsrichtung verlaufenden Zugträgern angeordnet sind. Dadurch ergibt sich eine sehr stabile Konstruktion der Antriebsriemen und es wird vermieden, dass Nuten oberhalb von Zugträgern liegen und im Laufe ihrer Betriebsdauer im Nutgrund eventuell Schädigungen entstehen könnten, die die sichere Einbettung der Zugträger stören.

Eine weitere vorteilhafte Ausbildung besteht darin, dass der Abstand der Breitenmaxima einer Nut so ausgebildet ist, dass über einen Umschlingungsbogen einer Riemenscheibe (6) und/oder Umlenkrolle zwischen 1 und 100 Breitenmaxima verteilt sind, vorzugsweise zwischen 5 und 20 Breitenmaxima. Auch dies ist eine Auslegung, die im Vergleich mit den üblicherweise gebräuchlichen Aufzugsriemen die erfinderische Ausführung in einer Weise optimiert, dass Geräuschentwicklung nicht oberhalb der üblichen aus dem Stand der Technik bekannten Riemen liegt und doch höherer Zugkräfte übertragen werden können.

Eine weitere vorteilhafte Ausbildung besteht darin, dass der Abstand der Breitenmaxima nebeneinander angeordneter Nuten unterschiedlich ausgebildet ist. Eine solche Maßnahme, wenn sie in einem einfachen Fall auch nur dazu führt, dass die Breitenmaxima geringfügig gegeneinander in Längsrichtung verschoben sind, erlaubt durch die sich dann auch bildenden Interferenzen noch einmal eine deutliche Reduzierung der Geräuschemission. Werden andererseits beispielsweise bei Aufzugssystemen bestimmte Stellungen oder Betriebsbereiche besonders häufig angefahren oder sind sie durch besondere Belastungen oder Geräuschemissionen betroffen, so können diese Bereiche durch die genannte erfindungsgemäße Ausbildung entsprechend eingestellt werden

Eine weitere vorteilhafte Ausbildung besteht darin, dass der Nutquerschnitt trapezförmig, rechteckig, dreieckig oder bogenförmig ausgebildet ist. Hierdurch können die oben genannten erfindungsgemäßen Vorteile zu erreicht werden, ohne die bisher übliche Herstellung von Tragriemen oder Antriebsriemen über Gebühr zu beeinflussen. "Bogenförmig" meint hierbei eine Nutausbildung, die einen gerundeten, z.B. etwa halbrunden Nutgrund und daran tangential anschließende bis zur Oberfläche des Zug- oder Tragriemens reichende Wände aufweist.

Ein wesentlicher Effekt der erfindungsgemäßen Ausbildung von Flachriemen ist aber auch der, dass die in die Antriebsseite des Antriebsriemens eingebrachten Nuten als Verschleißanzeige dienen können, mit deren Hilfe eine einfache visuelle Kontrolle durchgeführt werden kann.

Die in Riemenquerrichtung abwechselnd zunehmende und abnehmende Breite *b* der Nuten zeichnet sich noch durch eine weitere besondere Eigenschaft während des Betriebs aus. Bei einer entsprechenden Auslegung verformen sich die Antriebsriemen so weit, dass sich die Nuten im Bereich ihrer Minimalbreiten *b min* unter Belastung schließen können. Dadurch entstehen bei bestimmten Betriebszuständen kleine Hohlräume, welche eine Art Unterdruck erzeugen, wie dies etwa bei einem Saugnapf entsteht.

Wie oben bereits dargestellt, sind die Zugkräfte im Zugriemen abhängig vom Umschlingungswinkel und vom Reibwert zwischen der Traktionsscheibe und dem Tragmittel. Die Antriebsriemen liegen also unter erheblicher Spannung und damit Anpresskraft über den Umschlingungsbogen auf den Rollen. Die Anpresskraft steigt dabei vom Einlaufpunkt in den Umschlingungsbogen bis zur Mitte, d.h. zur Hälfte des Umschlingungsbogens stetig an. Danach sinkt die Anpresskraft bis zum Auslaufpunkt wieder ab.

Durch diese Anpresskraft wird das Material des Riemens etwas verformt, wodurch sich, wie oben dargestellt, die Bereiche, in denen die Nutbreite minimal ist, schließen können. So entsteht ein geschlossener Hohlraum, der sich danach, also bei nachlassender Anpresskraft, wieder öffnet. Im dynamischen Betrieb ist damit kein Nachteil verbunden. Im statischen Betrieb, also etwa beim Stillstand, wird jedoch die Haftung an der Rolle vergrößert, was nicht unerwünscht ist.

Vorteilhafterweise lässt sich der erfindungsgemäße Flachriemen in einem Aufzugssystem einsetzen, bei dem es insbesondere auf die Übertragung von Drehmomenten bei geringer Geräuschentwicklung ankommt. Anhand eines solchen Ausführungsbeispiels soll die Erfindung näher erläutert werden. Es zeigen
- Fig. 1: eine Anwendung für einen erfindungsgemäßen Flachriemen innerhalb eines Aufzugssystems,
- Fig. 2: eine perspektivische Schnittdarstellung eines erfindungsgemäßen Flachriemens mit unterschiedlichen Nutformen.

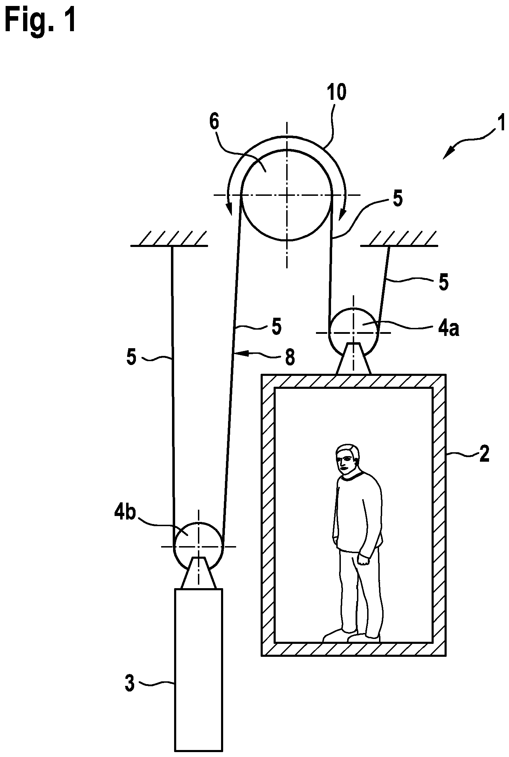

Die Fig. 1 zeigt in Form einer Prinzipskizze eine Anwendung für einen erfindungsgemäßen Flachriemen innerhalb eines Aufzugssystems 1. Es handelt sich hier um ein Aufzugssystem / eine Aufzugsanlage in einer 2:1 Aufhängungsart, bei der die Riemenenden am Schachtkopf eines Aufzugsschachts befestigt sind. Kabine 2 und Gegengewicht 3 hängen jeweils mittels Umlenkrollen 4a, 4b an als Flachriemen 5 ausgebildeten Tragriemen.

Der Tragrriemen aus elastomerem Material weist eine flache Antriebsseite 8 auf und wird über eine von einem hier nicht näher dargestellten Motor angetriebene Traktions- oder Antriebsscheibe 6 angetrieben, welche zwischen Kabine und Gegengewicht im oberen Bereich des Aufzugschachtes angeordnet ist. So entsteht ein einfacher Flaschenzug. Die Laufgeschwindigkeit des Flachriemens 5 ist dann doppelt so hoch wie die Fahrgeschwindigkeit der Kabine 2. Die Zugkraft wird auf der Antriebsscheibe 6 durch Umschlingungsreibung übertragen. Der Zug- oder Tragriemen 5 umschlingt die Riemenscheiben 6 umlaufend über einen Umschlingungsbogen 10. Auch die Umlenkrollen 4a und 4b werden vom Flachriemen 5 umlaufend umschlungen, wobei hier jedoch zur Vereinfachung keine weiteren Umschlingungsbögen eingezeichnet sind.

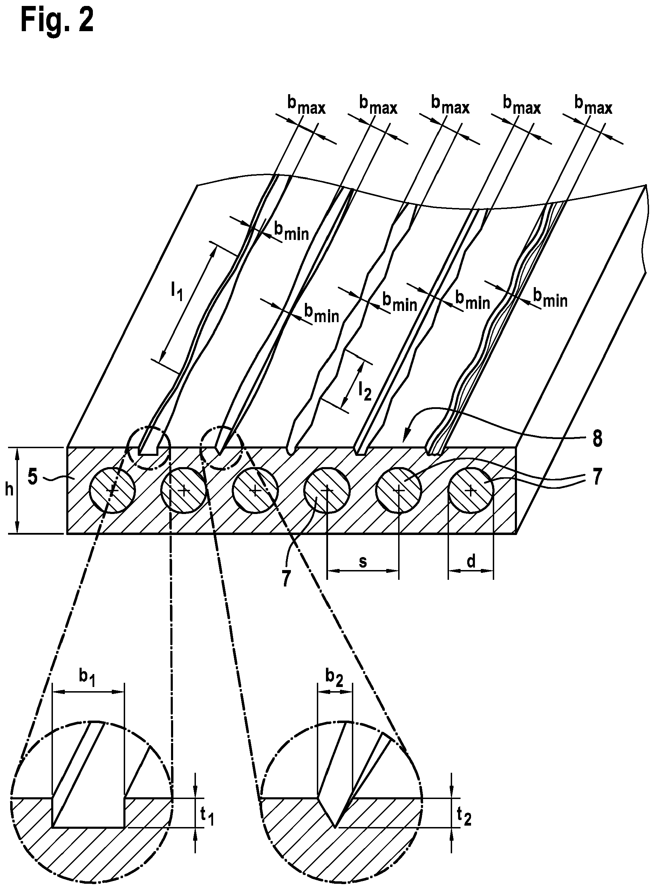

Der Flachriemen 5 ist mit eingebetteten Corden 7 als Zugträgern verstärkt, die in Längsrichtung des Flachriemens verlaufen. Der Aufbau des Flachriemens 5 ist in Form einer perspektivischen Schnittdarstellung prinzipiell in der Figur 2 dargestellt. Hier sind jedoch zur Verdeutlichung mehrere Formen von Nuten auf der Antriebsseite gezeigt. Übliche Ausführungen von Zug- oder Tragriemen beinhalten nur immer eine, maximal 2 dieser unterschiedlichen Nutformen, da ansonsten die Herstellung zu aufwendig ist.

Der Flachriemen 5 besteht aus elastomerem Material. Die Corde 7 bestehen aus geschlagenen Strängen, diese wiederum aus geschlagenen metallischen Filamenten, wobei Schlagrichtung und Schlaglänge jeweils unterschiedlichen und so ausgebildet sind, dass ein etwaiger verbleibender Drall kompensiert wird. Üblicherweise geschieht dies durch eine Kombination von S-und Z-Schlag. Der innere Aufbau der Corde mit Strängen und Filamenten ist hier jedoch nicht erfindungswesentlich.

Wie in der Fig.2 beispielhaft dargestellt, weist die Antriebsseite 8 des Flachriemens fünf in Längsrichtung des Flachriemens parallel verlaufende Nuten 9 auf, die jeweils eine in Riemenquerrichtung abwechselnd zunehmende und abnehmende Breite *b* aufweisen, nämlich eine sich Riemenquerrichtung periodisch zwischen den Werten *b min* und *b max* verändernde Breite. Wie oben bereits gesagt, sind hier fünf verschiedene, mögliche Nutformen der Einfachheit halber an einem Antriebsriemen dargestellt. Ganz links findet sich dabei eine Nut mit rechteckigem Querschnitt, daneben eine dreieckige Nut, dieser benachbart eine Nut mit halbrundem Querschnitt, daneben eine Nut mit trapezförmigem Querschnitt und schließlich eine Nut mit trapezförmigen Seiten und gewelltem Nutgrund.

Die Breite der Nuten variiert dabei hier zwischen den Werten *b min* = 0,1 *[mm]* und *b max* = (*s* - *d*) + *d*/2) [*mm*] variiert, vorzugsweise zwischen den Werten *b min* = 0,5 *[mm]* und *b max* = (*s* - *d*) + *d*/4) [*mm*], wobei in der Figur 2 ebenfalls dargestellt ist, dass mit dem Parameter d der Durchmesser der Zugträger bezeichnet ist, mit dem Parameter s der Abstand der Mittellinien zweier benachbarter Zugträger und mit dem Parameter h die Dicke des Antriebsriemens.

Der Abstand l₁ bzw l₂ der Breitenmaxima der Nuten ist hier so ausgebildet ist, dass über einen Umschlingungsbogen einer Riemenscheibe 6 zwischen 5 und 20 Breitenmaxima verteilt sind.

Die in der Figur 2 ebenfalls dargestellten Ausschnittsvergrößerungen zeigen auf der linken Seite die Nut mit rechteckigen Querschnitt und auf der rechten Seite die Nut mit dreieckigen Querschnitt. Die Nut mit rechteckigem Querschnitt besitzt die Tiefe ti und die Nutbreite bi, während die Nut mit dreieckigem Querschnitt die Tiefe t₂ und die Nutbreite b₂ besitzt.

### Bezugszeichenliste

- 1: Aufzugssystem / Aufzugsanlage
- 2: Kabine
- 3: Gegengewicht
- 4a, 4b: Umlenkrolle
- 5: Flachriemen / Zug- oder Tragriemen
- 6: Antriebsscheibe / Antriebsrolle
- 7: Cord / Zugträger
- 8: Antriebsseite des Flachriemens
- 9: Nut
- 10: Umschlingungsbogen
- b min: Breitenminima der Nut
- b max: Breitenmaxima der Nut
- b: Breite der Nut
- t: Tiefe der Nut
- s: Abstand der Mittellinien zweier benachbarter Zugträger
- h: Dicke des Antriebsriemens
- d: Durchmesser der Zugträger/Corde
- l₁, l₂: Abstand der Breitenmaxima der Nuten

## Patentansprüche

1. Zug- oder Tragriemen (5) aus elastomerem Material mit einer im Wesentlichen flachen Antriebsseite (8), insbesondere Aufzuggurt, wobei im elastomeren Material des Zug- oder Tragriemens (5) in seiner Längsrichtung parallel verlaufende Zugträger oder Corde (7) eingebettet sind und der Zug- oder Tragriemen (5) Riemenscheiben (6) und/oder Umlenkrollen (4a, 4b) eines Riementriebs umlaufend über einen Umschlingungsbogen (10) umschlingt, wodurch der Zug- oder Tragriemen angetrieben, umgelenkt oder geführt ist, wobei die flache Antriebsseite (8) des Zug- oder Tragriemens mehrere Nuten (9) aufweist, wobei die Nuten (9) in Riemenlängsrichtung verlaufen und eine in Riemenquerrichtung abwechselnd zunehmende und abnehmende Breite *b* aufweisen, vorzugsweise eine sich Riemenquerrichtung periodisch zwischen den Werten *b min* und *b max* verändernde Breite aufweisen,
**dadurch gekennzeichnet, dass**
die Breite zwischen den Werten *b min* = 0,1 [*mm*] und *b max* = (*s* - *d*) + *d*/2) [*mm*] variiert, vorzugsweise zwischen den Werten *b min* = 0,5 [*mm*] und
*b max* = (*s* - *d)* + *d*/4) [*mm*],
wobei
d = Durchmesser der Zugträger/Corde und
s = Abstand der Mittellinien zweier benachbarter Zugträger.

2. Zug- oder Tragriemen nach Anspruch 1, bei dem die Nuten (9) eine in Riemenlängsrichtung abwechselnd zunehmende und abnehmende Tiefe *t* aufweisen.

3. Zug- oder Tragriemen nach Anspruch 2, bei dem die Tiefe zwischen den Werten *t min* = 0,1 [*mm*] und *t max* = *(h* - *d*)/2) [*mm*] variiert, vorzugsweise zwischen den Werten *t min* = 0,2 [*mm*] und *t max* = *(h* - *d*)/4) [*mm*],
wobei
d = Durchmesser der Zugträger/Corde und
h = Dicke des Zug- oder Tragriemens.

4. Zug- oder Tragriemen nach einem der Ansprüche 1 bis 3, bei dem die Nuten (9) auf der Antriebsseite jeweils zwischen zwei in Längsrichtung verlaufenden Zugträgern (7) angeordnet sind.

5. Zug- oder Tragriemen nach einem der Ansprüche 1 bis 4, bei dem der Abstand der Breitenmaxima einer Nut so ausgebildet ist, dass über einen Umschlingungsbogen (10) einer Riemenscheibe (6) und/oder Umlenkrolle (4a, 4b) zwischen 1 und 100 Breitenmaxima verteilt sind, vorzugsweise zwischen 5 und 20 Breitenmaxima.

6. Zug- oder Tragriemen nach Anspruch 5, bei dem der Abstand der Breitenmaxima nebeneinander angeordneter Nuten unterschiedlich ausgebildet ist.

7. Zug- oder Tragriemen nach einem der Ansprüche 1 bis 6, bei dem der Nutquerschnitt trapezförmig, rechteckig, dreieckig oder bogenförmig ausgebildet ist.

8. Aufzugssystem mit einem als Flachriemen nach Anspruch 1 bis 7 ausgebildeten Tragriemen.

## Claims

1. Traction or carrying belt (5) made from elastomeric material and having a substantially flat drive side (8), in particular lift belt, wherein traction members or cords (7) running parallel are embedded in the elastomeric material of the traction or carrying belt (5), in the longitudinal direction thereof, and the traction or carrying belt (5) wraps around belt sheaves (6) and/or deflecting pulleys (4a, 4b) of a belt drive in a manner circulating via an arc of wrap (10), as a result of which the traction or carrying belt is driven, deflected or guided, wherein the flat drive side (8) of the traction or carrying belt has a plurality of grooves (9), wherein the grooves (9) run in the longitudinal direction of the belt and have a width *b* increasing and decreasing in an alternating manner in the transverse direction of the belt, preferably a width changing periodically between the values *b min* and *b max* in the belt transverse direction,
**characterized in that**
the width varies between the values *b min* = 0.1 *[mm]* and *b max* = ((*s* - *d)* + *d*/2) [*mm*], preferably between the values *b min* = 0.5 [*mm*] and *b max* = ((*s* - *d*) + *d*/4) [*mm*],
wherein
d = diameter of the traction members/cords, and
s = distance between the centre lines of two adjacent traction members.

2. Traction or carrying belt according to Claim 1, in which the grooves (9) have a depth *t* increasing and decreasing in an alternating manner in the longitudinal direction of the belt.

3. Traction or carrying belt according to Claim 2, in which the depth varies between the values *t min* = 0.1 [*mm*] and *t max* = ((*h* - *d*)/2) [*mm*], preferably between the values *t min* = 0.2 [*mm*] and *t max* = ((*h* - *d*)/4) [*mm*],
wherein
d = diameter of the traction members/cords, and
h = thickness of the traction or carrying belt.

4. Traction or carrying belt according to one of Claims 1 to 3, in which the grooves (9) on the drive side are each arranged between two traction members (7) running in the longitudinal direction.

5. Traction or carrying belt according to one of Claims 1 to 4, in which the distance between the width maxima of a groove is designed in such a manner that between 1 and 100 width maxima, preferably between 5 and 20 width maxima, are distributed over an arc of wrap (10) of a belt sheave (6) and/or deflecting pulley (4a, 4b).

6. Traction or carrying belt according to Claim 5, in which the distance between the width maxima of grooves arranged next to one another differs.

7. Traction or carrying belt according to one of Claims 1 to 6, in which the groove cross section is trapezoidal, rectangular, triangular or arcuate.

8. Lift system having a carrying belt designed as a flat belt according to Claims 1 to 7.

## Revendications

1. Courroie de traction ou de support (5) en matériau élastomère, comprenant un côté entraînement (8) plat, en particulier sangle de levage, dans laquelle dans le matériau élastomère de la courroie de traction ou de support (5) des supports de traction ou des cordes (7) sont incorporés qui s'étendent en parallèle dans la direction longitudinale de ladite courroie, et la courroie de traction ou de support (5) s'enroule sur des poulies (6) et/ou des poulies de renvoi (4a, 4b) d'un entraînement par courroie de manière périphérique par l'intermédiaire d'un arc d'enroulement (10) de sorte que la courroie de traction ou de support est entraînée, déviée ou guidée, dans laquelle le côté entraînement plat (8) de la courroie de traction ou de support présente des rainures (9), dans laquelle les rainures (9) s'étendent dans la direction longitudinale de la courroie et présentent une largeur *b* augmentant et diminuant en alternance dans la direction transversale de courroie, présentant de préférence une largeur changeant dans la direction transversale de courroie périodiquement entre les valeurs *b min* et *b max,*
**caractérisée en ce que**
la largeur varie entre les valeurs *b min* = 0,1 [*mm*] et *b max* = (*s* - *d)* + *d*/2) [*mm*], de préférence entre les valeurs *b min* = 0,5 [*mm*] et *b max* = (*s* - *d)* + *d*/4) [*mm*],
dans laquelle
d = le diamètre des supports de traction/ cordes, et
s = l'espacement des lignes médianes de deux supports de traction voisins.

2. Courroie de traction ou de support selon la revendication 1, dans laquelle les rainures (9) présentent une profondeur *t* augmentant et diminuant en alternance dans la direction longitudinale de la courroie.

3. Courroie de traction ou de support selon la revendication 2, dans laquelle la profondeur varie entre les valeurs *t min* = 0,1 [*mm*] et *t max* = (*h* - *d*)/2) [*mm*], de préférence entre les valeurs *t min* = 0,2 [*mm*] et *t max* = (*h* - *d*)/4) [*mm*],
dans laquelle
d = le diamètre des supports de traction/ cordes, et
h = l'épaisseur de la courroie de traction ou de support.

4. Courroie de traction ou de support selon l'une quelconque des revendications 1 à 3, dans laquelle les rainures (9) sont disposées du côté entraînement respectivement entre deux supports de traction (7) s'étendant dans la direction longitudinale.

5. Courroie de traction ou de support selon l'une quelconque des revendications 1 à 4, dans laquelle l'espacement des maxima de largeur d'une rainure est réalisé de telle sorte qu'entre 1 et 100 maxima de largeur, de préférence entre 5 et 20 maxima de largeur, sont répartis sur un arc d'enroulement (10) d'une poulie (6) et/ou d'une poulie de renvoi (4a, 4b).

6. Courroie de traction ou de support selon la revendication 5, dans laquelle l'espacement des maxima de largeur de rainures disposées côte à côte est réalisé différemment.

7. Courroie de traction ou de support selon l'une quelconque des revendications 1 à 6, dans laquelle la section transversale de rainure est réalisée en forme de trapèze, de rectangle, de triangle ou d'arc.

8. Système de levage comprenant une courroie de support réalisée sous forme de courroie plate selon les revendications 1 à 7.
